# EUROPEAN PATENT SPECIFICATION

(11) **EP 3 365 157 B1**
(45) Date of publication and mention of the grant of the patent: **19.08.2020**
(21) Application number: 16815930.9
(22) Date of filing: 10.10.2016
(51) Int. Cl.: B29C 64/20, B33Y 30/00, B33Y 40/00, B29C 64/106

(54) **DEVICE FOR CREATING FUNCTIONAL 3D MODELS**
VORRICHTUNG ZUR ERZEUGUNG FUNKTIONELLER 3D-MODELLE
DISPOSITIF POUR CRÉER DES MODÈLES 3D FONCTIONNELS

(30) Priority: 16.10.2015 CZ 201531658 U
(43) Date of publication of application: 29.08.2018
(73) Proprietor: 3Dsimo S.R.O., 11000 Prague 1 (CZ)
(72) Inventor: PASKEVIC, David, 198 00 Prague 9 (CZ)
(74) Representative: Novotny, Jaroslav
(86) International application number: PCT/IB2016/056056
(87) International publication number: WO 2017/064607

(56) References cited:
- "More Than a 3D Printing Pen - 3DSimo Mini Is The Ultimate Creator's Tool", PR Newswire , 23 June 2015 (2015-06-23), XP002767129, Retrieved from the Internet: URL:http://www.prnewswire.com/news-release s/more-than-a-3d-printing-pen---3dsimo-min i-is-the-ultimate-creators-tool-300103249. html [retrieved on 2017-02-10]
- "3DSimo Mini - The ultimate creator's tool", kickstarter.com , 25 July 2015 (2015-07-25), XP002767130, Retrieved from the Internet: URL:https://www.kickstarter.com/projects/3 dsimo-mini/3dsimo-mini-the-ultimate-creato rs-tool?token=7b654e78 [retrieved on 2017-02-10]
- "3Dsimo", kickstarter.com , XP002767133, Retrieved from the Internet: URL:https://www.kickstarter.com/profile/3d simo-mini/created [retrieved on 2017-02-10]

## Description

### Technical Fields

The technical solution concerns a device for creating 3D models from a wide range of plastic materials by means of a regulating, display and feed mechanism. Use of the mechanism for the exchange of attachments also falls within the technical field as a soldering iron, burning iron into various materials (wood, leather), and it also performs the function of a cutter of foam and plastic materials, and can be used for other multi-functional purposes. Use in the field as an auxiliary tool is possible for both professional 3D printers and model creation, where there is not emphasis on precision.

### Background Arts

There are several devices known for performing the function of 3D drawing, which use fixed temperature and material feed rate. One of them has a switch between two speeds. These competing devices are restricted because of the lack of choice of the most important parameters to only one or two types of plastic material, which is ABS or PLA. Also, their technical solution does not contain Bluetooth communication with a mobile device and a possibility of interchangeable attachments with their automatic detection. Because of a relatively low temperature of 230 °C, which is fixed, there is a high speed restriction in the extrusion of molten plastic and also uneven dosing. The whole device operates on the principle of feeding standardized plastic material with a diameter of 1.75 mm or 3 mm in the shape of a string towards a hot nozzle, where the plastic is melted and, due to pressure caused by the feeding of the string, it begins to extrude from the end of the nozzle. The end of the nozzle is always smaller than the width of the string. In addition, other technical solutions feed the consumable (string) along the entire length of the 3D pencil, causing a possible blockage or breakage of a string halfway and thus impossibility of further use. The entire device must then be disassembled and the string removed. The mechanism for string feeding (extruder) uses a bearing that is placed opposite the motor of a feed wheel, which has toothed grooves. This solution requires a very high accuracy of the string concerning both its diameter and ovality. Reduction or increase in the diameter of the string leads to the following problems, namely either that the string cannot pass through, or that it is too loose and unable to develop the necessary pressure on the nozzle.

Partially, the shortcomings of these devices are removed by a utility model no. 27051, which enables both a temperature control and choice of a string's diameter that may be of different materials. Thanks to a different design technical solution of string feeding, there are no complications with clogging or breaking of strings. Even some other devices are able to choose a type of a string material.

But even this technical solution does not use the device for any purpose other than 3D drawing, i.e. all known devices can only serve the purpose of 3D drawing and no other.

### Disclosure of Invention

The aforementioned shortcomings are removed by a device for creating functional 3D models consisting of a casing of the device which houses an extruder and a drive mechanism, as well as display units and control units, based on this technical solution with a principle consisting in the fact that the casing of the device is provided with a mechanism for inserting and fastening various interchangeable attachments on its front side. The attachments are equipped a recording device, comprising a chip, for transmitting information to a connector located on the casing of the device, and which is used to transfer information into a reader device located on the casing. Thanks to the information transmission, the control unit registers which attachment is used and adjusts the operation of the entire device.

The control unit is also equipped with the advantage of a Bluetooth unit for the reception and transmission of wireless signal, making it possible to perform functional and other software settings of the device, remotely control it and programme new functional attachments.

The casing of the device is provided with the advantage of magnets that are used for attaching an external power supply based on magnetic force.

### Main advantages of the technical solution:

1. Interchangeability of functional attachments and their automatic detection
2. Bluetooth communication with a mobile device
3. Possibility to use the device with an external power supply, which is fixed with magnets
4. Choice of the material feed rate - strings from 0% to 100%
5. Display of information on the display unit
6. Possibility of choosing from preset profiles
7. Possibility of simple service
8. Use of any plastic material available on the market
9. Possibility of any temperature in the range of 0-490 °C
10. Soldering function using molten tin
11. Burning function into wood, leather and other materials
12. Cutting function of plastic and foam materials using a resistive wire

### Brief Description of Drawings

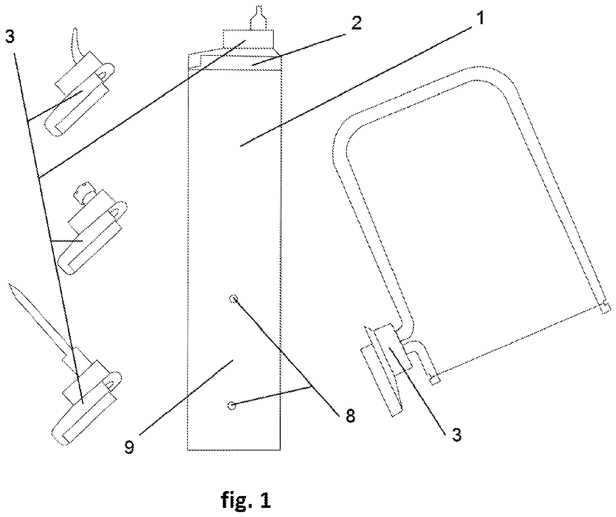

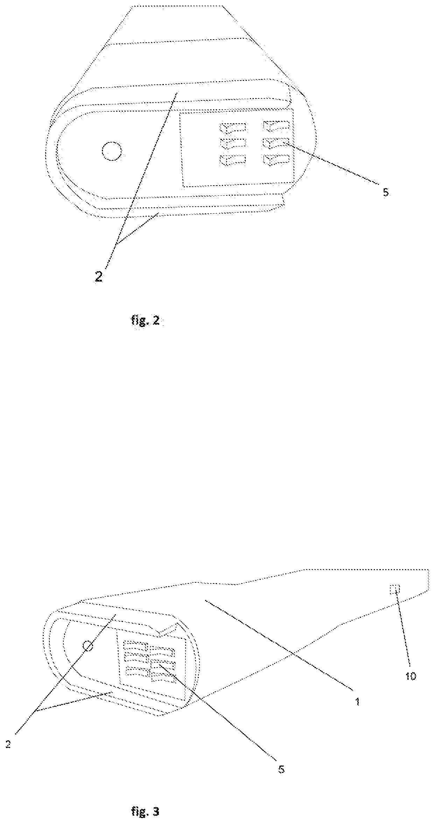

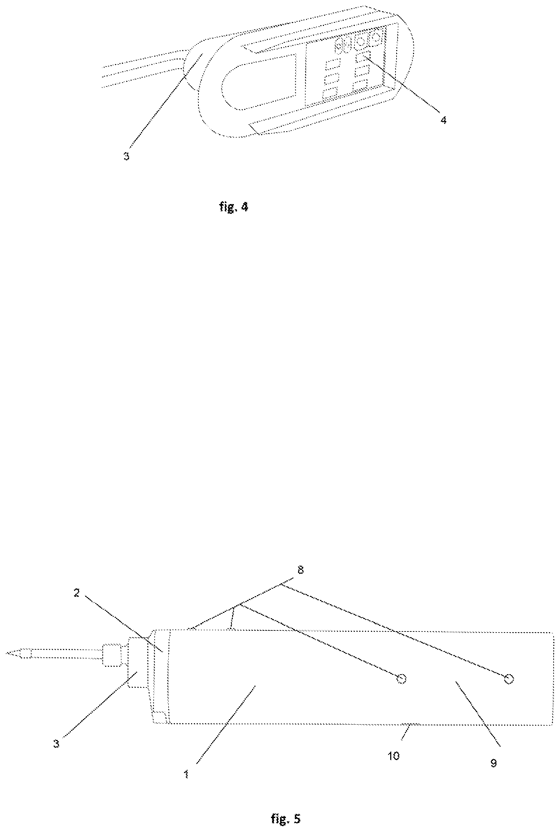

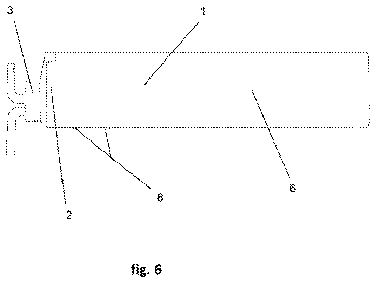

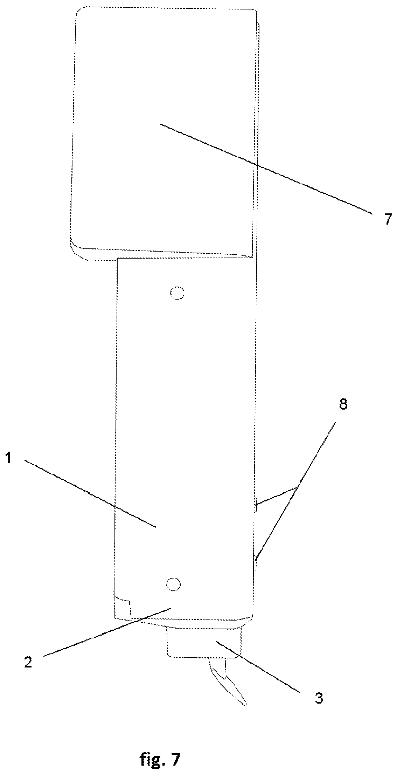

The technical solution will be explained in greater detail by means of drawings where Fig. 1 represents an assembly of the device with an inserted attachment and together with other individual attachments, Fig. 2 represents the device with removed attachment, where the mechanism for inserting and fastening the connector is visible, Fig. 3 represents the device with removed attachment, Fig. 4 represents the lower part of an attachment with a recording device for information transmission, Fig. 5 represents the device with an attachment inserted on the side of functional buttons, Fig. 6 represents the device with an attachment inserted on the side of magnets serving for fastening an external power adapter, Fig. 7 represents the device with an attached external power adapter.

### Made for Carrying out the Invention

According to submitted drawings, the device consists of an outer casing 1, where its front side is provided with a display unit 9 in the form of a seven-segment LED display visible through a plastic wall displaying various possibilities for controlling temperature, speed, preheating and type of attachment, which affect the operation of the device. The display unit 9 is controlled by buttons 8, two of which are located by the display unit 9 and are used for accurate adjustment, and the remaining two buttons are on the top of the device and are used to control the extrusion of material to the nozzle. The display unit 9 and all four buttons 8 are connected to a control unit, which is part of a connection of control electronics inside the device, and its main control element is ATMega, which is a simple microprocessor and where the required software is saved. The ATMega microprocessor has an electronically nondestructive memory, so information is kept even though it is not plugged into a power source 7. The memory is retained even when the device is turned off. The control unit regulates the temperature according to set parameters using feedback provided by the thermistor. These data are evaluated by the control electronics and a command is sent to increase the heating using the heating resistance of the heating body equipped with a sensor for temperature control, or cool using a cooling element, of the heating unit. The control unit regulates performance of the heating resistance, cooling element and ultimately performance of the engine, which affects the speed of the drive mechanism with the string feed wheel - this is in case the attachment 3 for 3D drawing is used. The display unit 9 is connected to this control unit as well, which allows the graphical interface, where you can select language, type of attachment, drawing profiles or temperature and speed. Based on preset input information through the display unit 9 and buttons 8, the control unit sends instructions that control the operation of cooling. The cooling module affects the temperature of the nozzle based on a feedback from the thermistor and the desired temperature to be achieved. The cooling module provides temperature stability on the nozzle while avoiding undesirable overheating of electronics. The control unit also regulates the speed of the drive mechanism with the string feed wheel. A presser is located opposite the feed wheel, speed of which depends on the drive unit receiving instructions from the control unit. A string is guided between the feed wheel and the presser. The feeding wheel provides string movement and the presser always rests on the string and defines its straight and accurate movement, which is therefore not affected by a different strength of a plastic string.

The front side of the plastic casing 1 has a mechanism 2, rails, where attachments that contain a chip for information transfer 4 are inserted 3, allowing the device to identify the exact type of attachment 3. Detection is based on transmitting a command to the control unit, leading to the determination of what type of attachment 3 it is. On the basis of determining what kind of attachment 3 it is, the control unit adjusts its other functions through the device. Procedure for using the device:
A USB adapter is connected into an outlet and then into a side USB socket 10 on the device. At that moment, the device is activated (turned on).The welcome message appears on the display unit 9. If an attachment 3 is inserted into the mechanism 2 for fastening attachments 3, in this example represented by rails, the chip 4 on a removable attachment 3 will be connected with the connector 5 located on the casing 1 of the device via a direct contact and information on the selected type of attachment 3 will be forwarded to the control unit. After a short while, the inserted attachment is detected 3, and based on this a mode will be selected. Temperature and material to be used can be set for each mode in the following order:
a) detection of an attachment
b) selection of material profiles (tin, wood, plastic, foam)
c) automatic connection to a mobile device
d) creation of new material profiles

When the device is connected to a power source 7, an identification of the type of attachment 3, or its absence, occurs in the attachment detection section 3 using the chip 4 and the connector 5. After updating and loading the attachment, for example 3D drawing, the display unit 9 displays a choice of material profiles. After changing the attachment 3, the process is repeated.
The automatic connection with a mobile device occurs every time the device is connected to a power source 7. It is then possible to use a mobile application to set and select the mode of work (3D drawing, burning, soldering, sawing). Additionally, new material profiles can be created or updated and it is possible to look at the overall consumption and time of use of individual attachments 3. The whole communication is based on Bluetooth technology. The 3D drawing function has a function of continuous extrusion while pressing two front buttons. Also, always when the user is drawing and releases the button for material extrusion, a retract will activate (drawing the material back) that prevents clogging and leaking of surplus material. The problem of clogging the device with a plastic string was removed using a stainless steel tube which is chemically cleaned and residues, which previously prevented further extrusion (causing blockage) in the Teflon tube, are no longer settling. Currently, there are 4 attachments 3 (burning, soldering, cutting and 3D drawing), each attachment 3 can be removed, which means that it can be cleaned without disassembly. Identification of attachments 3 is done using a custom integrated logic that is in all attachments 3, and which is connected to the body of 3Dsimo via Pogo pins. Touch of these contacts will send a command that an attachment was inserted 3. Then electronics will detect it and set all the functions that the user can use. For example, after inserting the 3D drawing attachment 3, the cooling, engine for feeding of filament and preheating are activated. If the attachment 3 for soldering is inserted, only the preheating is activated and the use of engine is prevented.

Creation of new material profiles is either in the form of updates from the manufacturer or through the section creation of a new profile, where the user sets the desired temperature, speed and function.

If the device is not powered from the socket USB adapter, it is powered by an external power source 7, which is inserted into the side USB socket 10 via its connector and held by magnets 6 on the side of the device casing 1, whereas the magnets 6 are located both on the device casing 1 and at the external power supply 7 itself.

### Industrial Application of the Invention

The device is universally industrially applicable both in the field of professional technology of 3D printers, where it can serve to support large 3D printing machines, and in the field of an average consumer, who will use this space and handling undemanding device for their artistic or other technical activities. The device is used to create 3D models, process them and also create functional electrical devices. The device will be used by architects, modellers, designers and other creative working people.

### List of reference numerals

- 1: device casing
- 2: mechanism for inserting and fastening attachments
- 3: attachment/s
- 4: chip
- 5: connector
- 6: magnets
- 7: external power supply
- 8: buttons
- 9: display unit
- 10: USB socket

## Claims

1. Device for creating functional 3D models consisting of a casing of the device which houses an extruder and a drive mechanism, as well as display units and control units, all interconnected, wherein the casing (1) of the device is provided with a mechanism (2) for inserting and fastening individual attachments (3) on its front side, **characterised in that**, each attachment is provided with a chip (4) for transmitting information to a connector (5) located on the casing (1) of the device.

2. The device for creating 3D models according to claim 1, wherein the casing (1) is provided with magnets (6) for fastening an external power supply (7).

## Patentansprüche

1. Vorrichtung zum Erzeugen von funktionellen 3D-Modellen, bestehend aus einem Gehäuse der Vorrichtung, in dem ein Extruder und ein Antriebsmechanismus untergebracht sind, sowie Anzeigeeinheiten und Steuereinheiten, die alle miteinander verbunden sind, wobei das Gehäuse (1) der Vorrichtung mit einem Mechanismus (2) zum Einsetzen und Befestigen einzelner Aufsätze (3) auf seiner Vorderseite versehen ist, **gekennzeichnet dadurch, dass** jeder Aufsatz mit einem Chip (4) zum Übertragen von Informationen an einen Verbinder (5) versehen ist, der sich am Gehäuse (1) der Vorrichtung befindet.

2. Die Vorrichtung zum Erzeugen von 3D-Modellen nach Anspruch 1, wobei das Gehäuse (1) mit Magneten (6) zum Befestigen einer externen Stromversorgung (7) versehen ist.

## Revendications

1. Dispositif pour créer des modèles 3D fonctionnels, consistant en un boîtier du dispositif qui contient une extrudeuse et un mécanisme d'entraînement, ainsi que des unités d'affichage et des unités de contrôle, toutes interconnectées, où le boîtier (1) du dispositif comporte un mécanisme (2) pour insérer et fixer des pièces jointes (3) individuelles sur le devant, **caractérisé en ce que** chaque pièce jointe est fournie avec une puce (4) pour transmettre des informations à un connecteur (5) situé sur le boîtier (1) du dispositif.

2. Le dispositif pour créer des modèles 3D selon la revendication 1, où le boîtier (1) comporte des aimants (6) pour fixer une source d'alimentation (7) externe.
